# EUROPEAN PATENT APPLICATION

(11) **EP 1 870 145 A1**
(43) Date of publication of application: **26.12.2007**
(21) Application number: 07110786.6
(22) Date of filing: 21.06.2007
(51) Int. Cl.: A63H 29/10, A63H 23/10

(54) **Water toy**

(30) Priority: 23.06.2006 JP 2006174546
(71) Applicant: Agatsuma Co., Ltd., Sumida-ku Tokyo (JP)
(72) Inventor: Todokoro, Shinji, Tokyo (JP)
(74) Representative: Skone James, Robert Edmund

(57) **Abstract**

A water toy is disclosed comprising a cylindrical main body (1) wherein figure housing bodies (8) are connected, a base part (3) for fixing the main body (1) vertically and a water stop releasing part (5), wherein a figure body (7) is housed in the main body (1), the figure housing bodies (8) have an opening (82) in their upper part and a figure body is housed inside thereof, the base part (3) has a main body supporting part (31) supporting the main body (1) and has a water stop control part (4) stopping water poured in the main body (1), and the water stop releasing part (5) comprises a stopper releasing part (51), a vertically movable part (53) connected to the rear end of the stopper releasing part (51) and a locking part (56) detachably engaging with the upper end of the vertically movable part (53), where the engagement with the vertically movable part (53) is disengaged when the figure body (7) moved upward in the main body (1) abuts the locking part (56).

## Description

The present invention relates to a water toy, in particular, to a water toy which is capable of helping young children become familiar with numbers while playing with water.

Conventionally, various water toys that young children play with in a place suitable for play with water such as a bathroom or a swimming pool are provided. For example, floating toys which are floated to play on the water surface, such as plastic molded animal and vehicle toys and sponge formed dolls, and water sprinkling toys such as water guns and watering cans are well known.

Meanwhile, young children acquire concentration, creativity, understanding and the like while playing, therefore, water toys that have a function to promote intellectual growth not only to aim to play in the water place.

For example, according to the related art disclosed in Japanese Registered Utility Model No.3039377, a watertoy with a function of indicating the number of operating of a moving body, which is a so-called "Shishi-odoshi (like bird clapper)" type, is provided, where the moving body is operated by receiving water flowing into the installed water wheel when water is poured from above. Also, according to the related art disclosed in Japanese Utility Model Application Laying-open No.6-48794, a water toy that an erecting pipe which has a vertically movable pipe having a figure fixed on the upper part thereof internally is connected to a pump is provided, where the figure is appeared from inside of the erecting pipe in accordance with vertically moving the movable pipe by pushing water drawn into the pump out.

Although various water toys are provided as described above, an unprecedented water toy which children can enjoy having the time at the water place is required.

The present invention was made to meet the aforesaid request, the object thereof is to provide a water toy which can attract the interest of children and can enjoy studying numbers while playing with water.

The present invention relates to a water toy comprising a main body to which figure housing bodies are fluidically connected, the main body having a vertical axis; a base part for fixing the main body vertically; and a water stop releasing part;
wherein a figure body is housed in the main body, which figure body moves upward and downward with a water level of water inside the main body;
wherein each figure housing body is hollow and has an opening in an upper part thereof, and a figure body is housed within each figure housing body;
wherein the base part has a hollow main body supporting part which supports the main body and has a water stop control part which retains water within the main body; and
wherein the water stop releasing part is fitted to the main body and is comprised of a stopper releasing part which co-operates with the water stop control part, a vertically movable part which is connected to the stopper releasing part and which extends upward along the outer surface of the main body, and a locking part which detachably engages the upper end of the vertically movable part and which protrudes above the main body, wherein the engagement of the locking port with the vertically movable part is disengaged when the figure body housed in the main body abuts the locking part. Preferably, the fluidic connections are provided in the form of connection pipes.

In the invention, it is preferred that a connection pipe is provided integrally with the main body supporting part and connects the main body to a figure housing body in which a figure body is housed, provided on the base part. And, nine figure housing bodies in each of which a figure body is housed respectively are preferably connected to the end of the connection pipes so as to have regularly spaced positions.

Additionally, in the invention, the figure bodies are preferably mounted on a float base each, more preferably, the float base which the figure body housed in the figure housing body is mounted on is formed larger than the opening of the figure housing body.

In addition, in this invention, it is preferred that a drainage groove is formed in the base part, where one end of the drainage groove is connected to the main body supporting part and other end is located in the edge of the base part.

Furthermore, in the water toy of the invention, it is preferred that a cup for measuring a prescribed water amount is further comprised, where the figure bodies in the figure housing bodies are appeared in the order of the lowly-placed figure housing body every time one cup of water is poured in the main body.

Preferably, the stopper releasing part is positioned inside the water stop control part.

Preferably, the water stop releasing part is fitted to the rear side of the main body.

Advantageously, the vertically movable part of the water stop releasing part is connected to the rear end of the stopper releasing part.

Preferably, the main body is cylindrical.

The water toy of the present invention can attract the interest of children since figure bodies housed in the main body and the hollow figure housing bodies are pushed up with a water level and appear therefrom so that the movements of the figure bodies are fantastic. Also, figure housing bodies are sequentially numbered in the order of the lowly-placed figure housing body, the figure bodies are appeared corresponding to the order, thus, children can enjoy studying numbers while playing.

An embodiment of a water toy will now be described with reference to the accompanying drawings in which:
Fig.1 is a front view of an embodiment of a water toy according to the present invention;
Fig.2 is a side view of the embodiment shown in Fig. 1;
Fig.3 is a view illustrating the movement of the water toy shown in Figs 1 and 2 when pouring water;
Fig.4 is an exploded perspective view of a main body, a base part and a water stop releasing part;
Fig.5 is a schematic cross-section illustrating the interaction between selected components of the water toy embodiment;
Fig.6 is a view showing the internal constitution of a figure housing body mounted on the base part;
Fig.7 is a view showing the internal constitution of a figure housing body mounted on the main body;
Fig.8 is an exploded view showing the constitution of a water stop control part; and
Fig.9 is a view illustrating the operation of the figure housing body mounted above the main body.

A water toy of the present invention comprises a cylindrical main body having a vertical axis which figure housing bodies are connected by connection pipes, a base part for fixing the main body vertically and a water stop releasing part. A figure body is housed in the main body, which moves upward and downward with a water level of water poured in the main body, and the figure housing bodies are formed in a hollow state and has an opening in their upper part and a figure body is housed inside thereof. In addition, the base part has a hollow main body supporting part which supports the main body and has a water stop control part which stops the water poured in the main body, where the water stop control part is fit and set inside the main body supporting part. Additionally, the water stop releasing part is fit to the rear side of the main body and is comprised of a stopper releasing part which is positioned inside of the water stop control part, a vertically movable part which is connected to the rear end of the stopper releasing part and which is extended upward along the outer surface of the main body, and a locking part which is detachably engaged with the upper end of the vertically movable part and which is protruded upward to the main body, where the engagement with the vertically movable part is disengaged when the figure body moved upward in the main body is touched to the locking part.

Hereinafter, an embodiment of a water toy in accordance with the invention shall be described with reference to the drawings. Note that it is to be understood that the invention is not limited to the following embodiment.

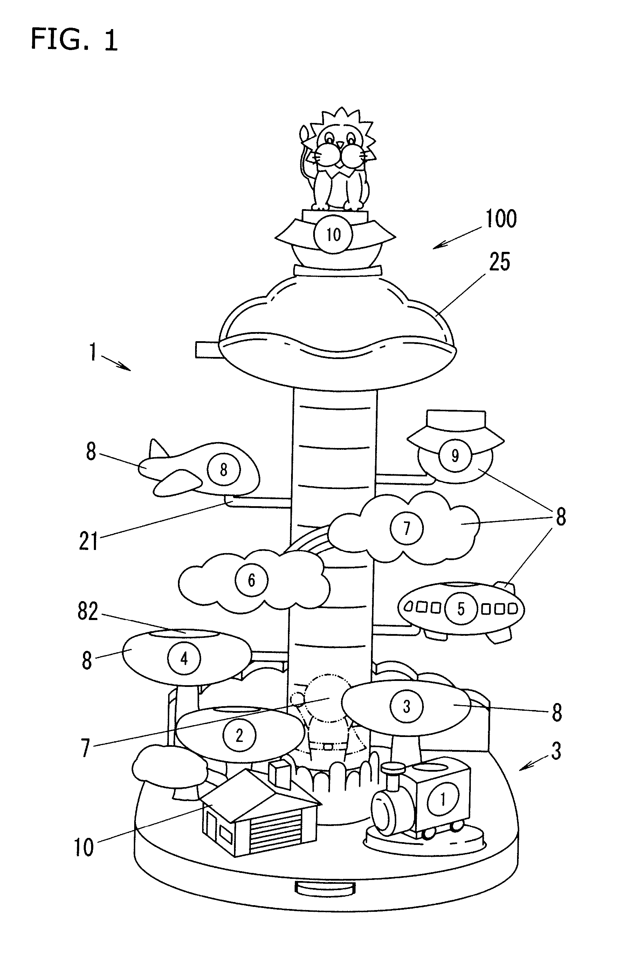

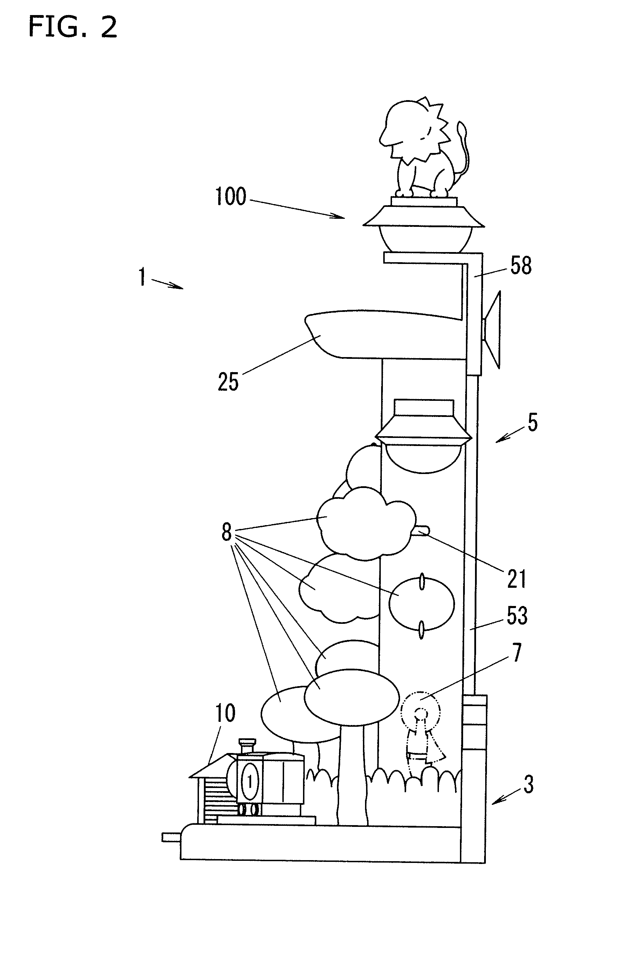

The water toy 100 of the present embodiment is made of a resin, as shown in Fig.1 and Fig.2. It comprises a cylindrical main body 1, a base part 3 for fixing the main body 1 vertically and a water stop releasing part 5.

The main body 1 is, as shown in Fig.1 to Fig.3, a transparent or translucent elongate body (preferably cylindrical) whose inside is visible, a figure body 7 is housed inside thereof and a water guide part 25 is fitted to the upper end. The axis of the main body 1 is substantially vertical and figure housing bodies 8 are each fluidically connected to the side wall thereof by connection pipes 21.

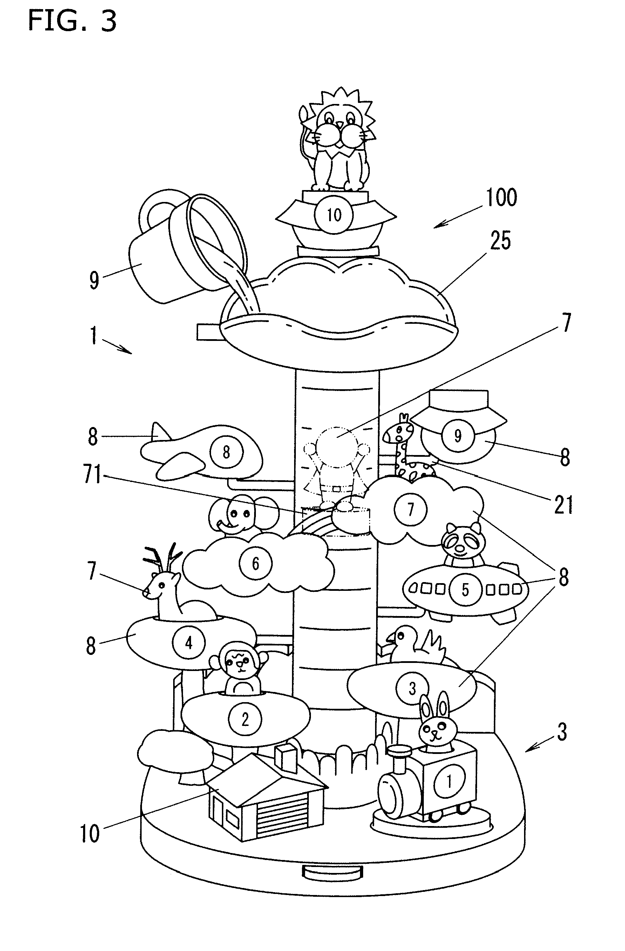

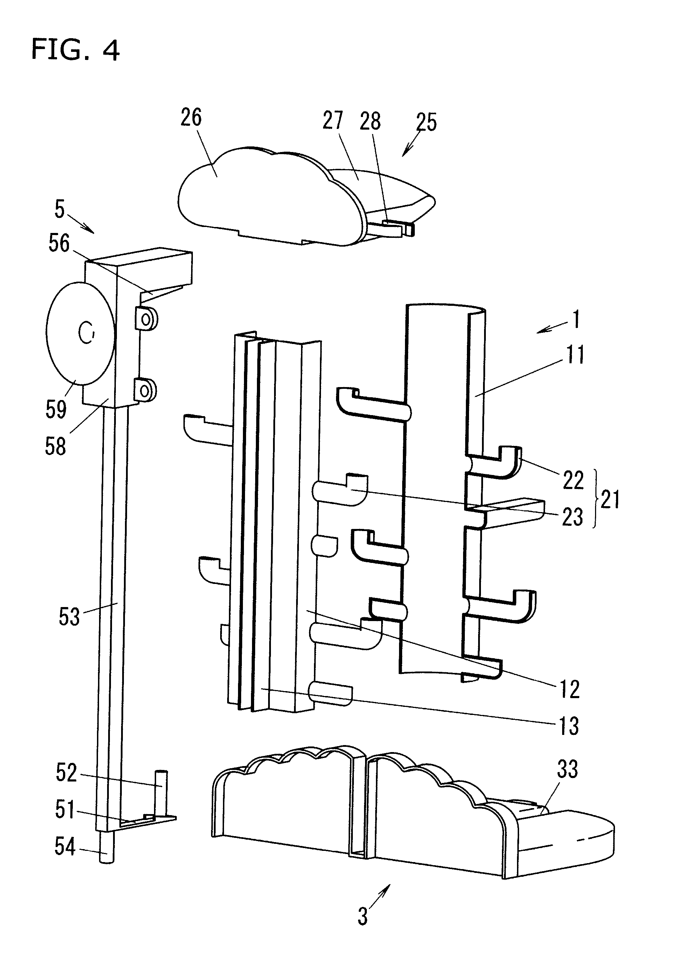

As shown in Fig.4, the main body 1 is formed by fitting a front body 11 and a rear body 12 to one another at their side edge parts, and as shown in Fig.1 and Fig.3, scales marked subequal to water level of a cup of water described below are put on the rear inner surface of the rear body 12, so that they are visible to a user through front body 11. Furthermore, a vertically movable part supporting member 13 is provided on the rear outer surface of the rear body 12, in which a vertically movable part 53 of a water stop releasing part 5 described below is slidably supported in a vertical direction.

To provide fluidic connection, connection pipes 21 are mounted in the side wall of the main body 1 so as to protrude in any arbitrary directions. For example, front half pipes 22 are provided on the edge part of the front body 11 and rear half pipes 23 are provided on the edge part of the rear body 12, then, connection pipes 21 are formed when the front body 11 and the rear body 12 are fitted to one another. Alternatively or in addition, connection pipes 21 can be formed in one piece, preferably integrally with the side wall of the front body 11 or the rear body 12.

As shown in Fig.4, the water guide part 25 comprises a rear erecting wall 26 and a water guide plate 27 mounted to the lower part of the rear erecting wall 26, the water guide part 25 being positioned relative to the upper end of the main body 1 so that an opening (not shown) at the bottom of the water guide plate 27 is positioned on the upper part of the main body 1, to direct water into the main body
1. In addition, a hook 28 is mounted on the side wall of the water guide plate 27 for hanging an accessory cup 9 (see Figure 3).

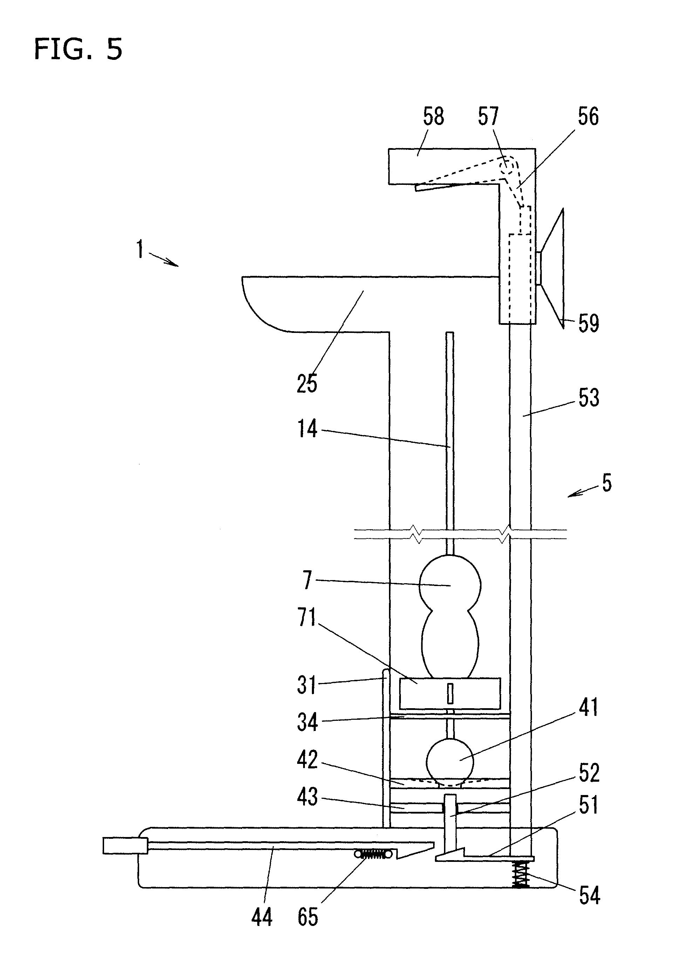

The figure body 7 housed inside the main body 1 is formed by plastic, silicon rubber or the like, and as shown in Fig.5, it is mounted on a float base 71. The float base 71 is adapted to stably support the vertical movement of the figure body 7 in the main body 1. The float base 71 is a (conveniently cylindrical) body which has an outer diameter smaller than the inner diameter of the main body 1 and is of sufficient thickness. Also, the float base 71 is formed by a material which can float on water, for example, it can be formed by sticking a plastic plate to a light and water-resistant material such as foamed polystyrene, or by molding a resin into a hollow.

In the embodiment, as shown in Fig.5, two support rods 14 are preferably provided on the left and right inner side surfaces of the main body 1 so as to run along the vertical axis and so as to face to each other for stable vertical movement of the float base 71 in the main body 1. In such case, recessed parts or apertures are provided on the float base 71, which are engaged with the support rods 14, and the float base 71 is housed in the base main body 1 so that the recessed parts thereof are engaged with the support rods 14. If the float base 71 is provided in the base main body 1 in such a manner, it is ensured that the figure body 7 can be vertically moved whilst remaining facing forwards.

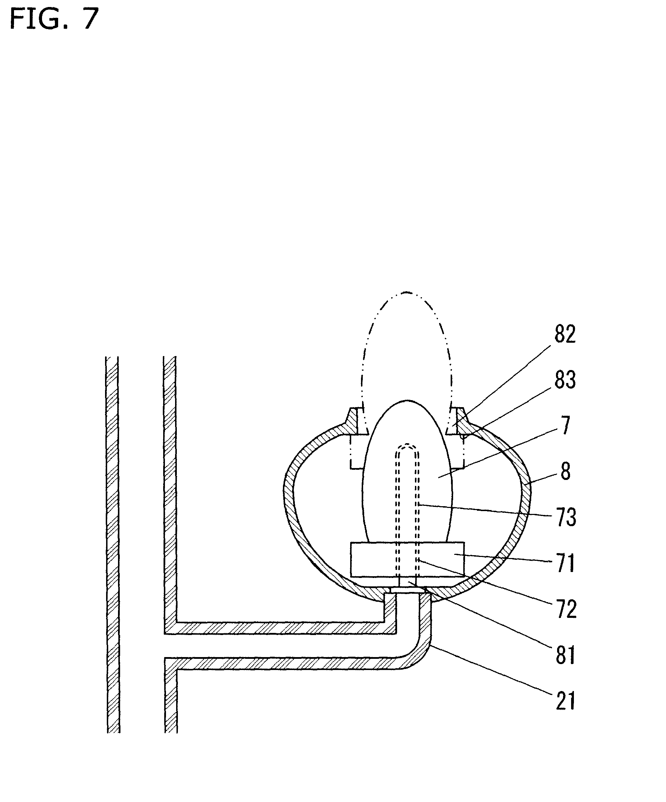

As shown in Fig.7, a hollow figure housing body 8 having an opening 82 at its upper part is connected to the end of each connection pipe 21, and a figure body 7 mounted on a float base 71 is housed in the figure housing body 8. As shown in Fig.1 and others, the external shape of the figure housing body 8 has no restriction, that is the figure housing body 8 can be formed to simulate any shape including shapes which appeal to children such as vehicles and natural things such as clouds. A support shaft 81 is provided on the bottom of the figure housing body 8 so as to maintain the float base 71 and figure body 7 in an upward position, where the support shaft 81 extends to just below the opening 82 of the figure housing body 8.

The figure body 7 housed inside of the figure housing body 8 may be formed by plastic, silicon rubber and the like, and formed in a size so as to protrude outside from the opening 82. Furthermore, a recessed part 73 is formed from the bottom part of the figure body 7 to the inside thereof, where the diameter of the recessed part 73 is slightly larger than the shaft diameter of the support shaft 81 and the height thereof is approximately same as the length obtained by subtracting the thickness of the float base 71 from the height of the support shaft 81. Also, the float base 71 is formed by a material capable of floating on water, for example, by sticking a plastic plate to a light and water-resistant material such as foamed polystyrene or by molding a resin into a hollow. The float base 71 has an outer diameter larger than the opening 82 of the figure housing body 8 and has a penetrating hole 72 at the center thereof, where the diameter of the penetrating hole 72 is slightly larger than the shaft diameter of the support shaft 81. The figure body 7 is fixed to the float base 71 so that the recessed part 73 of the figure body 7 corresponds to the penetrating hole 72 of the float base 71 and then is externally fitted to the support shaft 81 so as to be vertically slidable.

Therefore, when water is poured into the main body 1, the water flows into the figure housing body 8 through the connection pipe 21, the figure body 7 mounted on the float base 71 is protruded from the opening 82 of the figure housing body 8 with a water level. Then, the upper periphery of the float base 71 touches to a lower periphery 83 of the opening 82 (sealing the housing 8) and water remains in the figure housing body 8 without flowing from the opening 82.

Furthermore, in the embodiment, figure housing bodies 8 are connected to the main body 1 by connection pipes 21 in approximately equal spaces, the lower peripheries 83 of the openings 82 of the figure housing bodies 8 are arranged at approximately same height as the level scales marked in the rear body 12.

The volume of the accessory cup 9 is slightly larger than the spatial volume of one scale of the main body 1 and the spatial volume of one connection pipe 21 and the figure housing body 8 connected to the end thereof.

Secondly, the base part 3 shall be described. The base part 3 is provided to fix the main body 1 vertically and comprises a main body supporting part 31 for supporting the main body 1 and a water stop control part 4 for stopping the water poured in the main body 1.

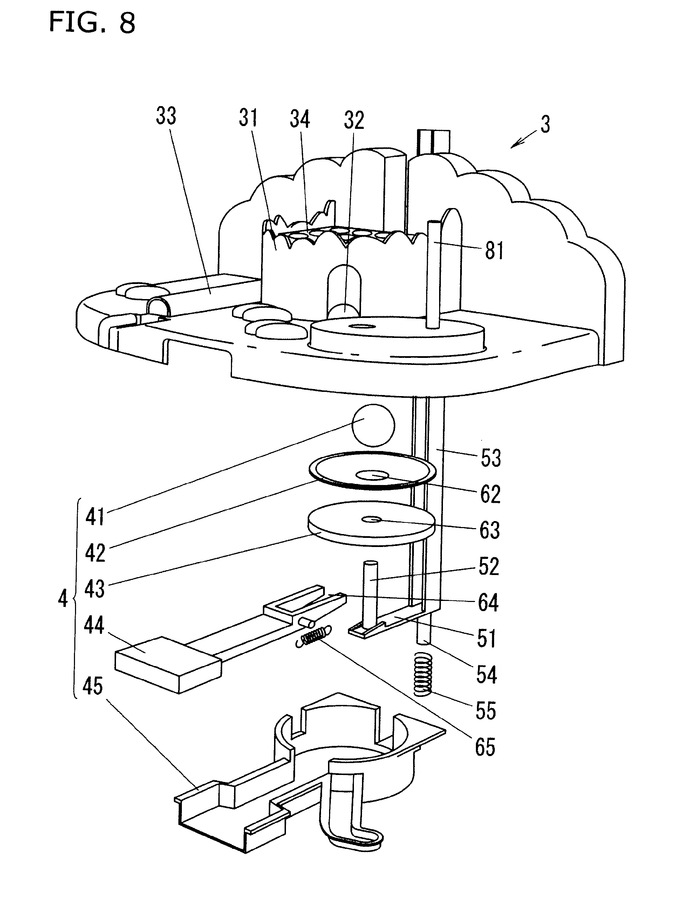

As shown in Fig.5, the inner diameter of the main body supporting part 31 is approximately the same as the outer diameter of the main body 1, and the main body supporting part 31 has a cavity inside. And as shown in Fig. 8, a support plate 34 which has penetrating holes is provided at a position above the center of a height direction of the main body supporting part 31 for supporting the lower end part of the main body 1 and for dispersing the pressure of water and water flowing.

The water stop control part 4 is provided to stop water poured in the main part body 1. As shown in Fig.5 and Fig.8, it comprises a stopper 41, a stopper receiving plate 42, an intermediate plate 43, a reset lever 44 and a support member 45 supporting the stopper 41, the stopper receiving plate 42 and the like within the main body supporting part 31, where the stopper 41, the stopper receiving plate 42, and the like are set inside the main body supporting part 31.

The stopper 41 is a spherical body formed by a material which sinks in the water such as a glass or a ceramic. The upper surface of the stopper receiving plate 42 is gently inclined down towards its center where there is an aperture 62 provided. The aperture 62 of the stopper receiving plate 42 is circular, and the diameter thereof is smaller than the diameter of the stopper 41 but larger than the outer diameter of a pushing pin 52 described below. The intermediate plate 43 has a penetrating hole 63 in its center, where the diameter of the penetrating hole 63 is approximately same as the outer diameter of the pushing pin 52. The reset lever 44 has an engaging groove 64 in its rear end part, which is an approximately U-shape in a plane view and opened to the rear side, and the lower surface of the rear part is inclined upward. Additionally, tension springs 65 are provided on the left and right side surfaces of the reset lever 44 in the horizontal state, where one end of the tension spring 65 is mounted to the side surface of the reset lever 44 and other end is mounted to the lower surface of the intermediate plate 43.

The water stop control part 4 is composed by disposing, in order from the above, the stopper 41, the stopper receiving plate 42, the intermediate plate 43, the reset lever 44 and the support member 45. As shown in Fig.5, the stopper releasing part 51 is positioned between the reset lever 44 and the support member 45 so that the pushing pin 52 of the stopper releasing part 51 of the water stop releasing part 5 described below is inserted in the penetrating hole 63 of the intermediate plate 43 and is engaged with the engaging groove 64 of the reset lever 44, and then the water stop control part 4 is set inside the main body supporting part 31.

In the embodiment, as shown in Fig.5, the stopper receiving plate 42 and the intermediate plate 43 are arranged above and below with a space. A penetrating hole (not shown) is provided in a position of the side wall of the main body supporting part 31 where is between the stopper receiving plate 42 and the intermediate plate 43, as shown in Fig.8, a drainage groove 33 is connected to the penetrating hole and the water poured in the main body 1 can be drained to the outside. The other end of the drainage groove 33 is located in the edge of the base part 3. As shown in Fig.1 and so on, if a decoration body 10 is placed over the drainage groove 33, the drainage groove 33 can not be visually recognized at a glance, and it can carry out performance as if water flows from the decoration body 10 when drained.

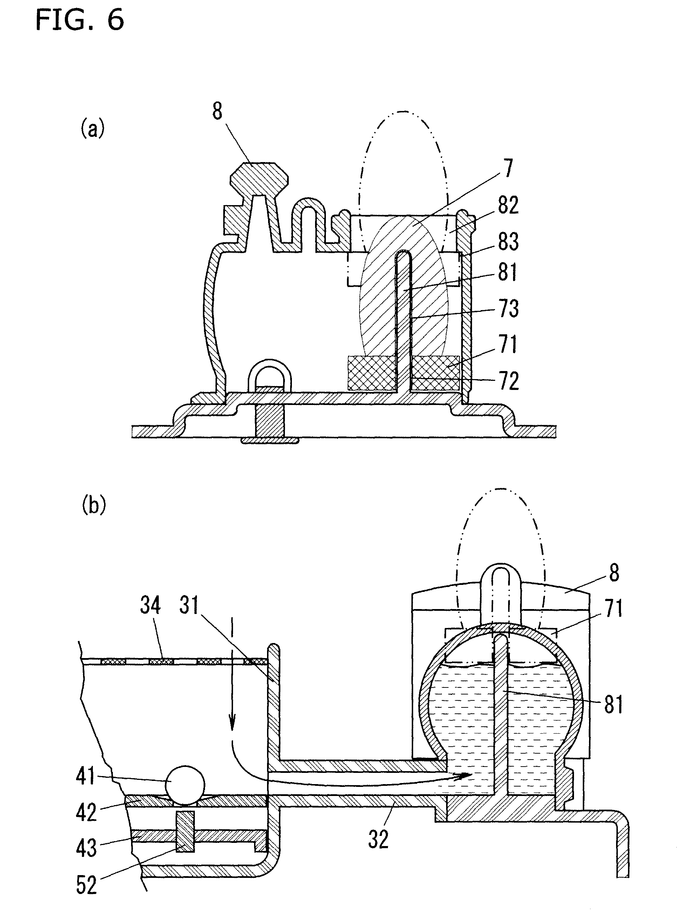

Furthermore, in this embodiment, as shown in Fig.6 and Fig.8, a connection pipe 32 is mounted in the side wall of the main body supporting part 31, a hollow figure housing body 8 having an opening 82 at its upper part is connected to the end of the connection pipe 32 and a figure body 7 mounted on a float base 71 is housed inside the figure housing body 8.

As shown in Fig.1 and so on, the figure housing body 8 is formed to simulate a shape which appeals to children, the support shaft 81 is provided on the bottom of the figure housing body 8 so as to erect upward, where the support shaft 81 is positioned just below an opening 82 of the figure housing body 8.

Also, as described above, the figure body 7 is formed by plastic, silicon rubber or the like, and formed in a size so as to protrude outside from the opening 82. Additionally, the figure body 7 is mounted on a float base 71 which has an outer diameter larger than the opening 82 of the figure housing body 8 and which has a penetrating hole 72 having a diameter slightly larger than the shaft diameter of the support shaft 81 at the center thereof.

The water stop releasing part 5 is fit to the rear side of the main body 1, as shown in Fig. 4, Fig.5 and Fig.8, it comprises the stopper releasing part 51 engaging with the water stop control part 4, a vertically movable part 53 connecting to the rear end of the stopper releasing part 51 and extending upward along the outer surface of the main body 1, a locking part 56 detachably engaging with the upper end of the vertically movable part 53 and protruding upward to the main body 1, and a frame part 58 supporting the locking part 56 and the upper part of the vertically movable part 53.

The stopper releasing part 51 is a narrow width plate and has the pushing pin 52 erecting upward at its forward upper surface. The vertically movable part 53 is connected to the upper surface of the rear end of the stopper releasing part 51 so as to extend upward along the outer surface of the main body 1, where the vertically movable 53 is supported in the vertically movable part supporting member 13 provided on the rear outer surface of the rear body 12 of the main body 1. A spring supporting shaft 54 is provided in the lower surface of the rear part of the stopper releasing part 51, where a compression spring 55 is externally fit to.

As shown in Fig.5, the locking part 56 has a thick L-shape in cross section, where protruded parts 57 are provided in either side of the side surface of the corner. The locking part 56 is rotatably supported inside the frame part 58 at its protruded parts 57. One end of the locking part 56 is protruded downward and can be engaged with the top end of the vertically movable part 53. The other end of the locking part 56 is protruded frontward and is positioned above the main body 1, where the figure body 7 moved upward in the main body 1 connects to.

The frame part 58 has an L-shape in a side view, it is mounted on the upper part of the main body 1 and covers the locking part 56 and the upper part of the vertically movable part 53. Additionally, a sucker 59 is provided in the rear surface of the frame part 58 to suckingly fix the water toy 100 to the wall and the like. When using the water toy 100 at the bathroom and the like, it can be fixed to the bathroom tiles by the sucker 59.

The water toy 100 of the embodiment is set that the lower end part of the main body 1 is put on the upper surface of the support plate 34 of the main body supporting part 31 of the base part 3 and the vertically movable part 53 is engaged with the vertically movable part supporting member 13 provided in the rear body 12 of the main body 1 in the state that the stopper releasing part 51 of the water stop releasing part 5 is engaged with the water stop control part 4 of the base part 3.

In the water toy 100 of the embodiment, the water poured in the main body 1 flows into figure housing bodies 8 through connection pipes 21,32 connected to the main body 1 and the main body supporting part 31, and then, figure bodies 7 housed in the figure housing bodies 8 are moved upward with the water level and are appeared from inside of figure housing bodies 8. Therefore, it can attract children's interest.

In the embodiment, as shown in Fig.1, numbers, alphabet, words or the like are marked on the figure housing bodies 8 in sequential order from the lower position. In doing so, figure bodies 7 appear from the inside of the figure housing bodies 8 in sequential order from the lower position by pouring water into the main body 1, thus, a user can enjoy studying numbers while playing.

Since figure housing bodies 8 are mounted to the main body 1 so that their openings 82 are each positioned approximately equal to water level of a cup of water of the accessory cup 9, the figure bodies 7 are appeared one by one from the figure housing body 8 in every pouring one cup of water in order from the lower position. Therefore, by counting out, for example, 1,2,..., when pouring each cup of water to the main body 1 by the cup 9, it can be visually enjoyed appearing the figure bodies 7 and can enjoy studying numbers.

Next, how to play the water toy 100 of the present embodiment shall be described below.

Firstly, the stopper 41 is fit into the aperture 62 of the stopper receiving plate 42 by pushing the reset lever 44 in towards the back of the toy. When the reset lever 44 is pushed, the stopper releasing part 51 is pushed downwardly according to the incline of the rear part of the reset lever 44, the top end of the pushing pin 52 is positioned lower than the stopper receiving plate 42, and then, the stopper 41 is fit into the aperture 62 of the stopper receiving plate 42. In addition, along with the downward movement of the stopper releasing part 51, the vertically movable part 53 is also moved downwardly, and then, the end part protruded downward of the locking part 56 is engaged with the top end of the vertically movable part 53.

After that, when the pressing force is released, the reset lever 44 returns to the original position by return force of the tension springs 65 arranged at the both side surfaces thereof. The vertically movable part 53 is retained in its downward position by locking part 53.

Secondly, water is poured into the main body 1 from the water guide part 25 mounted at the top end of the main body 1.

When one cup of water of the cup 9 is poured from the water guide part 25, the water is retained in the main body 1 and is also flowed into the lowest connection pipe and the figure housing body connected to the connection pipe. In figures, the water is poured first into the figure housing body 8 connected to the main body supporting part 31, which has a number of 1. As shown in Fig.6b, the water poured into the main body supporting part 31 flows into the figure housing body 8 through the connection pipe 32. Then, the figure body 7 inside of the figure housing body 8 moves upward along the support shaft 81 with rising of the water level. Since the opening 82 of the figure housing body 8 is smaller than the outer diameter of the float base 71 which the figure body 7 is mounted, the float base 71 is stopped in the state that the upper outer periphery is touched to the lower periphery 83 of the opening 82. Then, as shown in Fig.6a and Fig.6b, the opening 82 is blocked up (sealed) with the float base 71, and the water inside of the figure housing body 8 remains in the figure housing body 8 without overflowing. The figure body 7 inside of the main body 1 is also moves upward with rising of the water level.

When more water is poured in the main body 1 by the cup 9 in the same manner, as shown in Fig.3, figure bodies are appeared in order from the figure housing body 8 which has a number of 2, and the figure body 7 inside of the main body 1 moves upward at the same time. In figure housing bodies 8 connected to the main body 1, as shown in Fig.7, the water flows into the figure housing bodies 8 through the connection pipe 21, then figure bodies 7 inside thereof move upward along the support shaft 81 with the water level. Since the openings 82 of the figure housing bodies 8 are smaller than the outer diameter of the float bases 71 which the figure bodies 7 are mounted, the float bases 71 are stopped in the state that the upper outer peripheries are touched to the lower peripheries 83 of the openings 82. Then, the openings 82 are blocked up with the float bases 71, and the water inside of the figure housing bodies 8 remain in the figure housing bodies 8 without overflowing.

Once a total of nine cups of water have been poured into the main part in the same manner, nine figure bodies 7 will have appeared from the openings 82 of the figure housing bodies 8, which have each number of 1 to 9.

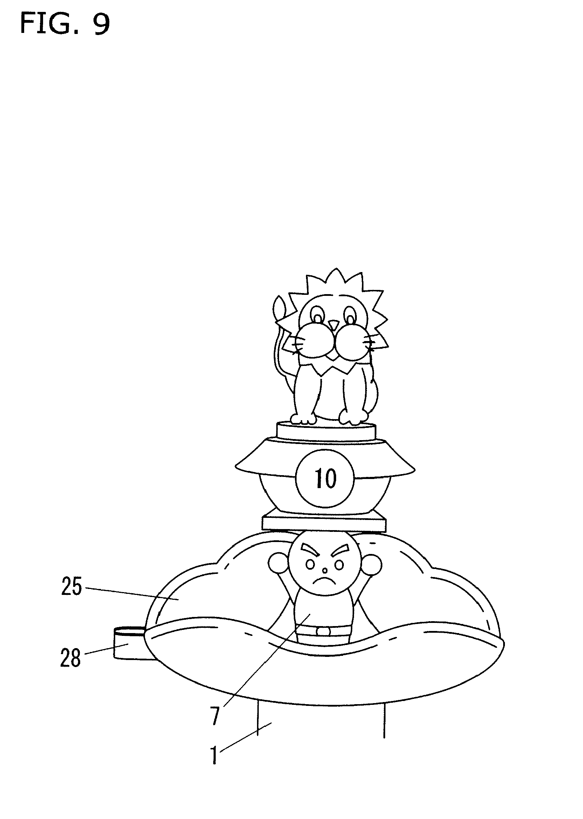

Furthermore, when the tenth cup of water is poured, as shown in Fig.9, the figure body 7 inside of the main body 1 appears from the opening of the water guide plate 25 with the water level. Then, the figure body 7 abuts the locking part 56 positioned above the main body 1 shown in Fig.5, and the forwardly protruded end part of the locking part 56 is pushed up. When the end part is moved upward, the downwardly protruded part of the locking part 56 rotates forward about the left and right protruded parts 57 and the locking part 56 disengages the top end part of the vertically movable part 53.

When the locking part 56 is deviated from (disengages) the vertically movable part 53, the vertically movable part 53 and the stopper releasing part 51 move upward by returning force of the compression spring 55 mounted on the rear end of the lower surface of the stopper releasing part 51, and the top end part of the pushing pin 52 provided in the stopper releasing part 51 pushes the stopper 41 up.

Then, a gap is formed between the stopper 41 and the stopper receiving plate 42, draining water which had been poured into the main body 1 and the figure housing bodies 8 flows downward from the penetrating part 62 of the stopper receiving plate 42, and then the water flows out through the drainage groove 33 provided on the main body supporting part 31.

In the embodiment, the figure bodies 7 take the form of shapes which are preferred by children, such as characters of cartoon and animation films and animals. It is also preferred that various decorations are placed on the base part 3. For example, as shown in Fig.1, figure housing bodies 8 numbered 2 to 4 are formed to imitate trees by providing the trunk as the decoration under the figure housing bodies 8, so those trees look as if they were grown from the base part 3.

Furthermore, in the embodiment, the main body 1, connecting pipes 21 and figure housing bodies 8 can be integrally formed in the water toy 100. And, the base part 3 can be integrally formed with the main body 1, where the outer periphery of the main body supporting part 31 of the base part 3 can be made the same size as the outer periphery of the main body 1 and the support plate 34 is provided on the top part of the main body supporting part 31.

## Claims

1. A water toy comprising a main body to which figure housing bodies are fluidically connected, the main body having a vertical axis; a base part for fixing the main body vertically; and a water stop releasing part;
wherein a figure body is housed in the main body, which figure body moves upward and downward with a water level of water inside the main body;
wherein each figure housing body is hollow and has an opening in an upper part thereof, and a figure body is housed within each figure housing body;
wherein the base part has a hollow main body supporting part which supports the main body and has a water stop control part which retains water within the main body; and
wherein the water stop releasing part is fitted to the main body and is comprised of a stopper releasing part which co-operates with the water stop control part, a vertically movable part which is connected to the stopper releasing part and which extends upward along the outer surface of the main body, and a locking part which detachably engages the upper end of the vertically movable part and which protrudes above the main body, wherein the engagement of the locking port with the vertically movable part is disengaged when the figure body housed in the main body abuts the locking part.

2. The water toy as set forth in claim 1, wherein a fluidic connection is provided integrally with the main body supporting part and connects the main body to a figure housing body, in which a figure body is housed, provided on the base part.

3. The water toy as set forth in claim 1 or claim 2, wherein nine figure housing bodies in each of which a figure body is housed respectively, are connected to the end of the connection pipes so as to have regularly spaced positions.

4. The water toy as set forth in any of the preceding claims wherein the figure housing bodies are fluidically connected to the main body by connection pipes.

5. The water toy as set forth in any of the preceding claims, wherein each figure body is mounted on a float base.

6. The water toy as set forth in claim 5, wherein each float base on which a figure body is mounted is formed larger than the opening of the respective figure housing body.

7. The water toy as set forth in any of the preceding claims, wherein a drainage groove is formed in the base part, where one end of the drainage groove is connected to the main body supporting part and other end is located in the edge of the base part.

8. The water toy as set forth in any of the preceding claims, further comprising a cup for measuring a prescribed water amount wherein the relative volumes of the cup and main body are such that one figure body appears from the figure housing bodies each time one cup of water is poured into the main body.

9. The water toy as set forth in claim 8 wherein the figure housing bodies are arranged such that on pouring each successive cup of water into the main body, the figure bodies appear in succession from the lowest-positioned figure housing body to the highest.

10. The water toy as set forth in any of the preceding claims wherein the stopper releasing part is positioned inside the water stop control part.

11. The water toy as set forth in any of the preceding claims wherein the water stop releasing part is fitted to the rear side of the main body.

12. The water toy as set forth in any of the preceding claims wherein the vertically movable part of the water stop releasing part is connected to the rear end of the stopper releasing part.

13. The water toy as set forth in any of the preceding claims wherein the main body is cylindrical.
